# EUROPÄISCHE PATENTSCHRIFT

(11) **EP 3 427 559 B1**
(45) Veröffentlichungstag und Bekanntmachung des Hinweises auf die Patenterteilung: **25.03.2020**
(21) Anmeldenummer: 18182873.2
(22) Anmeldetag: 11.07.2018
(51) Int. Cl.: A01B 3/421, A01B 15/14

(54) **ANBAUDREHPFLUG**
MOUNTED ROTATABLE PLOUGH
CHARRUE PORTÉE ROTATIVE

(30) Priorität: 12.07.2017 DE 202017104155 U
(43) Veröffentlichungstag der Anmeldung: 16.01.2019
(73) Patentinhaber: PÖTTINGER Landtechnik GmbH, 4710 Grieskirchen (AT)
(72) Erfinder: Hehenberger, Martin, 4070 Eferding (AT)
(74) Vertreter: Thoma, Michael

(56) Entgegenhaltungen:
- EP-A1- 0 045 030
- WO-A1-2014/067508
- DE-A1- 3 709 696
- DE-A1- 3 824 787
- DE-A1- 3 908 985
- DE-U1- 7 726 689
- DE-U1- 8 032 587

## Beschreibung

Die vorliegende Erfindung betrifft einen Anbaudrehpflug mit einem Anbaubock zum Anbau an einen Schlepper, einem Pflugrahmen, der zwei Pflugscharreihen trägt und um eine liegende Wendeachse drehbar ist, wobei die Pflugscharreihen durch einen Schnittbreitenaktor in ihrer Schnittbreite verstellbar sind und der Pflugrahmen an einem Wendebock, der um die genannte liegende Wendeachse schwenkbar am Anbaubock gelagert ist, um eine Einschwenkachse quer zur Wendeachse einschwenkbar gelagert und durch einen Druckmittel betätigten Einschwenkaktor für den Wendevorgang in eine Wendestellung mit verringerter Querausladung einschwenkbar ist, wobei der Einschwenkaktor von einer Schwenkwinkelsteuerung für verschiedene Schnittbreiten in verschiedene Hubstellungen zum Erreichen der gewünschten Wendestellung steuerbar ist.

Ein solcher Anbaudrehpflug ist aus der Schrift DE 38 24 787 A1 bekannt, dessen Pflugrahmen zwei Pflugscharreihen trägt, die durch einen Schnittbalkenaktor in der Schnittbreite verstellbar sind. Der Pflugrahmen ist an einem Wendebock, der selbst um die Wendeachse schwenkbar am Anbaubock gelagert ist, um eine Einschwenkachse quer zur Wendeachse einschwenkbar gelagert, um für den Wendevorgang eine verringerte Querausladung zu haben, wobei der Einschwenkaktor für verschiedene Schnittbreiten in verschiedene Rückstellungen für jeweils gewünschte Wendestellungen steuerbar ist.

Bei mehrscharigen Dreh- bzw. Wendepflügen mit größerer Arbeitsbreite erstreckt sich der längliche Pflugrahmen üblicherweise mehr oder minder schräg zur liegenden Wendeachse, die sich üblicherweise liegend in Fahrtrichtung erstreckt. Wird der Pflugrahmen im Vorgewende um die genannte Wendeachse gedreht, um für die nächste Fahrgasse die zuvor nicht benutzte Pflugscharreihe in Arbeitsstellung zu bringen, kommt es durch den schrägstehenden Pflugrahmen zu einer ausgreifenden, viel Platz benötigenden Wendebewegung. Je schräger sich der Pflugrahmen zur Wendeachse erstreckt, desto größer wird der Abstand der am hinteren Ende des Pflugrahmens befestigten Pflugschare von der Wendeachse, sodass sich einerseits ein großer Hebelarm und damit ein großes Wendemoment ergibt, das zu starken Beanspruchungen der Anlenk- und Lagerstruktur des Pflugs führt und hohe Stellkräfte des Wendeaktors benötigt. Zum anderen kommt es zu stark ausgreifenden Bewegungen, was einerseits zu einem Einstechen in den Boden oder andererseits zum Anschlagen an seitlichen Begrenzungen führen kann.

Es wurde deshalb bereits vorgeschlagen, den Pflugrahmen für den Wendevorgang oder auch zum Zwecke des Transports um eine Einschwenkachse quer zur Wendeachse einzuschwenken, um den Pflugrahmen näher an die Wendeachse zu bringen bzw. die Ausladung quer zur Wendeachse zu verringern, was im Wesentlichen dadurch erreicht wird, dass der Schrägstellungswinkel des länglichen Pflugrahmens gegenüber der Wendeachse verkleinert wird. Je nach Aufhängung bzw. Anlenkung des Pflugrahmens bspw. über eine Mehrgelenksstruktur kann dies auch eine Querbewegung des Pflugrahmens beinhalten, die den Pflugrahmen und die daran angebauten Pflugscharreihen näher in das Zentrum der Wendebewegung bringt.

Für das Einschwenken des Pflugrahmens vor dem bzw. für den Wendevorgang können Einschwenkzylinder oder andere Druckmittelaktoren Verwendung finden, die den Pflugrahmen gegenüber dem Wendebock Fremdenergie betätigt einschwenken. Dabei wurde bspw. bereits vorgeschlagen, den Einschwenkzylinder an die Druckmittelbetätigung des Wendezylinders anzukoppeln, sodass bei Druckmittelbeaufschlagung des Wendezylinders auch der Einschwenkzylinder betätigt wird.

Ein Problem hierbei ergibt sich, wenn der Drehpflug eine Schnittbreitenverstellung besitzt, wie dies bei moderneren Drehpflügen regelmäßig der Fall ist. Durch den Schnittbreitenaktor können die Pflugschare in ihrer Schnittbreite verstellt werden, was bspw. eine Verstellung der Schrägstellung des Pflugrahmens und/oder der Pflugschare zur Fahrtrichtung beinhaltet kann. Je nachdem, in welcher Schnitt- bzw. Arbeitsbreite der Pflug gefahren wird, muss der vorgenannte Einschwenkzylinder unterschiedliche Stellwege zurücklegen, um den Pflugrahmen in die gewünschte Wendestellung zu verbringen, da der Einschwenkaktor den Pflugrahmen hierzu unterschiedlich weit verschwenken muss.

Um die gewünschte Wendestellung anfahren zu können, ist es bislang üblich, den Einschwenkzylinder gegen Anschläge fahren zu lassen, die eine jeweilige Endstellung des Einschwenkaktors mechanisch vorgeben. Die Anschläge können dabei verstellt werden, um je nach Schnittbreite die benötigte Hubendstellung des Einschwenkaktors passend einstellen zu können. Bei hydraulischer Schnittbreitenverstellung, die eine häufigere Verstellung zulässt, ist dies jedoch mühsam, da jedes Mal die Anschläge neu eingestellt werden müssten, wenn die Schnittbreite verstellt wird.

In der Schrift WO 2014/067508 A1 wurde deshalb vorgeschlagen, die die Endstellung der Einschwenkbewegung begrenzenden Anschläge nicht mehr direkt am Einschwenkzylinder anzubringen bzw. in diesen zu integrieren, sondern die Einschwenkbegrenzung mittels einer Langlochstange zu realisieren, die in die Lenkeraufhängung des Pflugrahmens integriert ist und über ihr Langloch eine Schnittbreitenverstellung zulässt, gleichzeitig aber über die stirnseitigen Enden des Langlochs die Einschwenkstellung für den Wendevorgang vorgibt. Der besagte Langlochlenker dient hierbei als Begrenzungsanschlag für die Einschwenkbewegung, die für den Wendevorgang vorgenommen wird. Die Belastungen an diesem Langlochlenker sind jedoch weiterhin recht hoch. Zudem ist das gesamte Einlenkgetriebe relativ komplex.

Weiterhin wurde bereits vorgeschlagen, die Einschwenkbewegung nicht mittels eines separaten Einschwenkaktors zu bewerkstelligen, sondern über eine gesteuerte Bewegung des Schnittbreitenaktors. Hierbei werden jedoch sämtliche Schnittbreitengelenke bewegt. Zudem muss nach dem Wendevorgang die Schnittbreitenverstellung wieder zurück in ihre Arbeitsstellung gefahren werden, wozu sich die Schnittbreiten-Steuervorrichtung die zuvor verlassene Stellung gemerkt haben muss und eine relativ komplexe, hydraulische Ansteuerung des Schnittbreitenaktors erforderlich ist.

Hiervon ausgehend liegt der vorliegenden Erfindung die Aufgabe zugrunde, einen verbesserten Anbaudrehpflug der genannten Art zu schaffen, der Nachteile des Standes der Technik vermeidet und letzteren in vorteilhafter Weise weiterbildet. Insbesondere soll ein auch bei verschiedenen Schnittbreiteneinstellungen einfach auszuführendes Einschwenken des Pflugrahmens für den Wendevorgang ermöglicht werden.

Diese Aufgabe wird durch einen Anbaudrehpflug gemäß Anspruch 1 gelöst. Bevorzugte Ausgestaltungen der Erfindung sind Gegenstand der abhängigen Ansprüche.

Es wird also vorgeschlagen, die eingeschwenkte Wendestellung nicht mehr durch einen Anschlag vorzugeben, gegen den der Einschwenkaktor oder ein mit dem Pflugrahmen verbundenes Bauteil gefahren wird, sondern den Einschwenkaktor hydraulisch bzw. Druckmittel betätigt in der Hubstellung zu halten, die der gewünschten Wendestellung des Pflugrahmens entspricht. Durch eine hydraulische bzw. Druckmittel betätigte Verriegelung des Einschwenkaktors können einerseits die stoßhaften Belastungen, wie sie beim Anfahren eines Anschlags auftreten, vermieden werden und andererseits in steuerungstechnisch einfacher Weise verschiedene Hubstellungen des Einschwenkaktors angefahren werden, um verschiedene Schnittbreiteneinstellungen zu kompensieren bzw. unabhängig von der jeweiligen Stellung des Schnittbreitenaktors die gewünschte Wendestellung für den Pflugrahmen einstellen zu können. Erfindungsgemäß umfasst die Schwenkwinkelsteuerung eine Erfassungseinrichtung zum Erfassen der Schwenkstellung des Pflugrahmens relativ zum Wendebock bezüglich der Einschwenkachse und ein Sperrventil zum Absperren des den Einschwenkaktor verstellenden Druckmittelkreises zum Anfahren verschiedener Wende- und/oder Transportstellungen des Einschwenkaktors in Abhängigkeit der erfassten Schwenkstellung des Pflugrahmens. Durch eine solche Erfassung der Pflugrahmenschwenkstellung und der Ansteuerung des Einschwenkzylinders in Abhängigkeit hiervon kann unabhängig von weiteren jeweils gefahrenen Pflugeinstellungen wie Schnittbreite, Vorfurchenbreite oder Zugpunkt der Pflugrahmen für den Wendevorgang und/oder für den Transport in eine jeweils gewünschte Wendestellung eingeschwenkt und der Einschwenkaktor in die hierzu erforderliche Hubstellung gefahren werden.

Um eine einfache, robuste Abtastung der Pflugrahmenschwenkstellung und gleichzeitig Betätigung des Sperrventils zu erreichen, kann in vorteilhafter Weiterbildung der Erfindung die genannte Erfassungseinrichtung eine mechanische Koppelung zwischen dem Wendebock und dem Pflugrahmen umfassen, die an das Sperrventil angebunden ist und Schwenkbewegungen des Pflugrahmens relativ zu dem Wendebock bezüglich der Einschwenkachse in eine Ventilstellbewegung umsetzt. Insbesondere kann eine solche mechanische Koppelung das Sperrventil in seine Sperrstellung verbringen, sobald der Pflugrahmen weit genug in das Zentrum der Wendebewegung bzw. nahe genug an die Wendeachse eingeschwenkt ist.

In vorteilhafter Weiterbildung kann das genannte Sperrventil bezüglich der Einschwenkachse drehfest an dem Pflugrahmen oder einem damit starr verbundenen Trägerteil befestigt sein, sodass das Sperrventil die Einschwenkbewegungen des Pflugrahmens relativ zum Wendebock mitmacht. Die vorgenannte mechanische Koppelung kann das solchermaßen angebrachte Sperrventil mit dem Wendebock verbinden, sodass die mechanische Koppelung, die an einem Betätigungselement des Sperrventils angelenkt sein kann, Schwenkbewegungen des Pflugrahmens relativ zum Wendeventilbetätigung bzw. Ventilstellbewegung umsetzt.

In kinematischer Umkehrung wäre es ebenfalls möglich, das Sperrventil am Wendebock anzuordnen und über die Koppelung, die in diesem Falle am Pflugrahmen oder einem damit verbundenen Trägerteil angelenkt sein kann, an die Pflugrahmenbewegungen anzubinden.

Die genannte mechanische Koppelung kann hierbei grundsätzlich unterschiedlich ausgebildet sein, wobei in vorteilhafter Weiterbildung der Erfindung eine gelenkig angelenkte Koppelstange, die Zug- und Druckkräfte übertragen kann, vorgesehen sein kann. Eine solche Koppelstange kann einerseits gelenkig an einem Verstellhebel des Sperrventils angelenkt und andererseits an dem Wendebock angelenkt sein, wenn das Sperrventil pflugrahmenfest montiert ist, oder am Pflugrahmen angelenkt sein, wenn das Sperrventil am Wendebock befestigt ist.

Insbesondere kann es günstig sein, den genannten Verstellhebel an dem Anlenkpunkt des Einschwenkaktors anzulenken, mit dem der Einlenkaktor gelenkig am Wendebock oder einem damit verbundenen Einschwenkträger angelenkt ist, sodass der genannte Anlenkpunkt des Einschwenkaktors eine Doppelfunktion übernimmt, nämlich einerseits den Einschwenkaktor anlenkt und andererseits die genannte Koppelstange anlenkt. Hierdurch kann eine platzsparende Ausbildung erzielt werden, während gleichzeitig die Stellbewegungen des Einschwenkaktors unmittelbar in eine Koppelstellbewegung umgesetzt werden.

Alternativ oder zusätzlich zu einer solchen Zug- und Druckkräfte übertragenden Koppelstange kann die mechanische Koppelung auch einen Seilzugmechanismus umfassen, der zwischen dem Wendebock und dem Pflugrahmen vorgesehen ist und Schwenkbewegungen des Pflugrahmens relativ zum Wendebock bezüglich der Einschwenkachse in eine Ventilstellbewegung des Sperrventils umsetzt. Ist in der vorgenannten Weise das Sperrventil am Pflugrahmen montiert, um Pflugrahmenbewegungen bezüglich der Einschwenkachse mitzumachen, kann der genannte Seilzugmechanismus einerseits an dem Sperrventil bzw. dessen Stellglied angelenkt und andererseits am Wendebock angelenkt sein, wobei ggfs. Umlenkrollen oder -mittel zum Umlenken des Ventilstellseils vorgesehen sein können, um die genannten Schwenkbewegungen des Pflugrahmens in Stellbewegungen des Seilzugmechanismus umzusetzen, insbesondere derart, dass das Seil des Seilzugmechanismus das Sperrventil in die sperrende Stellung verbringt, wenn der Pflugrahmen die ausreichend eingeschwenkte Wende- und/oder Transportstellung erreicht hat.

Alternativ oder zusätzlich zu einer solchen mechanischen Abtastung der Pflugrahmenschwenkstellung und Betätigung des Sperrventils kann die Erfassungseinrichtung aber auch einen berührungslos abtastenden Sensor zum Erfassen der Schwenkstellung des Pflugrahmens relativ zum Wendebock bezüglich der Einschwenkachse aufweisen, wobei die Schwenkwinkelsteuerung ein vorzugsweise elektrisch betätigbares Sperrventil, das in Abhängigkeit eines Sensorsignals des genannten Sensors betätigbar ist, aufweisen kann. Beispielsweise kann ein Winkelsensor die Schwenkstellung des Pflugrahmens relativ zum Wendebock messen bzw. erfassen und das Sperrventil betätigt werden, sobald ein ausreichend kleiner Schwenkwinkel erreicht wird, der eine ausreichend nahe im Wendezentrum liegenden Pflugrahmen angibt.

Die hydraulische bzw. Druckmittel basierte Drehwinkelsteuerung in Abhängigkeit der abgetasteten Pflugrahmenschwenkstellung ist insbesondere für komplexer verstellbare Drehpflüge bestens geeignet, bei denen verschiedene Einstellmöglichkeiten gegeben sind und der Pflugrahmen über ein komplexeres Anlenkgetriebe am Wendebock angelenkt ist, da über die genannte Druckmittel basierte Drehwinkelsteuerung mit Erfassung der Pflugrahmenschwenkstellung die gewünschte Wendestellung des Pflugrahmens unabhängig von variierenden Voreinstellungen der diversen Pflugparameter angefahren werden kann, ohne dass es notwendig wäre, diese diversen Pflugparameter für das Anfahren der Wendestellung zu verstellen und nach dem Wenden wieder zurückzufahren.

Insbesondere kann der Pflugrahmen über ein mehrgelenkiges Anlenkgetriebe am Wendebock angelenkt sein, welches Anlenkgetriebe zusätzlich zu dem Einschwenkaktor zumindest einen weiteren, davon beabstandeten Anlenkträger umfassen kann, der einerseits gelenkig am Wendebock und andererseits gelenkig am Pflugrahmen oder einem Zwischenrahmen angelenkt sein kann. Beispielsweise kann der genannte Anlenkträger zusammen mit dem Einschwenkaktor einen Gelenkabschnitt nach Art eines Viergelenks bilden, sodass eine Verstellung des Einschwenkaktors eine Verstellung des genannten Viergelenksabschnitts bewirkt. An dem genannten Viergelenksabschnitt kann der Pflugrahmen wiederum schwenkbar angelenkt sein und über weitere Verstellaktoren verschwenkt werden, beispielsweise über einen Vorfurchenaktor und/oder einen Schnittbreitenaktor und/oder einen Zugpunktaktor.

Vorteilhafterweise kann der Einschwenkaktor unabhängig von verschiedenen Stellungen der genannten weiteren Verstellaktoren betätigt werden, um den Pflugrahmen in die Wendestellung einschwenken zu können, ohne hierfür die weiteren Stellaktoren wie den genannten Schnittbreitenaktor, den Vorfurchenaktor oder den Zugpunktaktor verstellen zu müssen.

Der genannte Einschwenkaktor kann vorteilhafterweise an die Druckmittelversorgung des Wendeaktors, mittels dessen der Pflug gewendet werden kann, angebunden sein, insbesondere derart dass der Einschwenkaktor mit Druckmittel beaufschlagt wird, wenn Druck auf den Wendezylinder gegeben wird. Eine solche an den Wendezylinder - bzw. aktor angebundene Druckmittelbeaufschlagung des Einschwenkaktors kann bspw. dergestalt ausgebildet sein, dass das an sich für den Wendezylinder bestimmte Druckmittel erst in den Wendezylinder gegeben wird, wenn am Einschwenkzylinder ein vorbestimmtes Druckniveau erreicht wird, genauer gesagt an dem Sperrventil, das dem Einschwenkzylinder vorgeschaltet ist, da natürlich kein Druckmittel mehr in den Einschwenkzylinder gelangen soll, sobald das Sperrventil abgesperrt ist, nachdem der Pflugrahmen seine gewünschte Wendestellung erreicht hat.

Die Erfindung wird nachfolgend anhand eines bevorzugten Ausführungsbeispiels und zugehörigen Zeichnungen näher erläutert. In den Zeichnungen zeigen:
- Fig. 1:: Eine schematische Draufsicht auf einen Anbaudrehpflug in einer ersten Arbeitsstellung, in der der Schwenkbock auf eine linke Pflugseite geschwenkt ist, und
- Fig. 2:: Eine schematische Draufsicht auf den Drehpflug ähnlich Fig. 1 in einer zweiten, gewendeten Arbeitsstellung, in der der Wendebock auf die rechte Pflugseite geschwenkt ist.

Der in den Figuren gezeigte Anbaudrehpflug 1 besitzt in an sich bekannter Weise einen Anbaubock 2, der bspw. über eine Dreipunktanlenkung mit Ober- und Unterlenkern an einem nicht gezeigten Schlepper anbaubar sein kann.

Der Anbaubock 2 trägt einen Pflugrahmen 3, an dem zwei Reihen von Pflugscharen 4 befestigt sind, wobei der genannte Pflugrahmen 3 zusammen mit den Pflugscharreihen um eine liegende, in Fahrtrichtung weisende Wendeachse 5 gegenüber dem Anbaubock 2 verdreht und damit gewendet werden kann, um wechselweise mit der einen Pflugscharreihe oder der anderen Pflugscharreihe pflügen zu können.

Um den Pflug wenden zu können, ist an dem Anbaubock 2 ein Wendebock 6 um die genannte Wendeachse 5 drehbar befestigt, wobei der Wendebock 6 mittels eines Wendeaktors 7 bspw. in Form eines Hydraulikzylinders gewendet werden kann, wobei der Wendebock 6 im Wesentlichen um 180° verdreht werden kann.

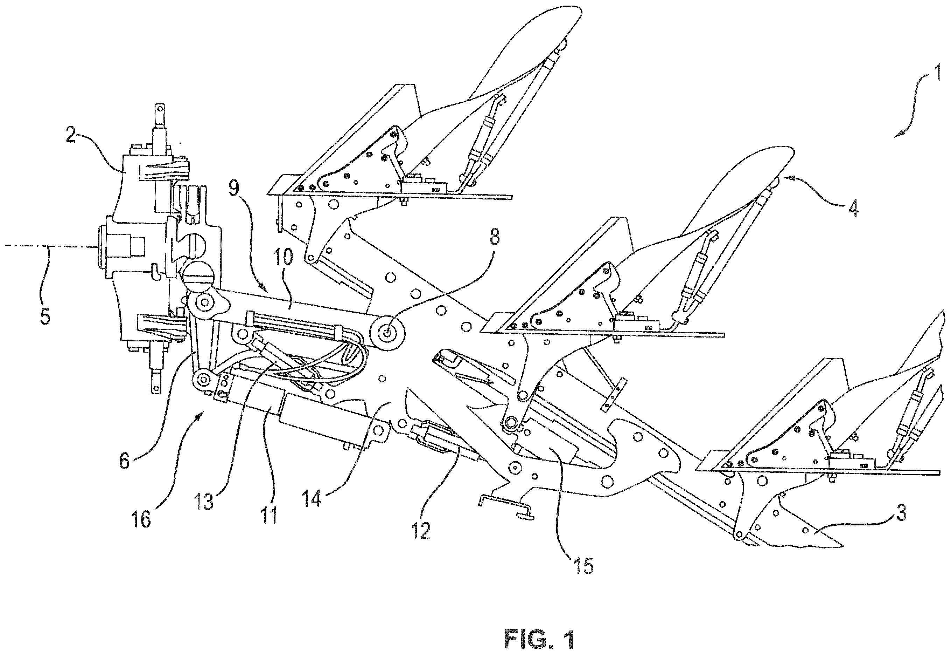

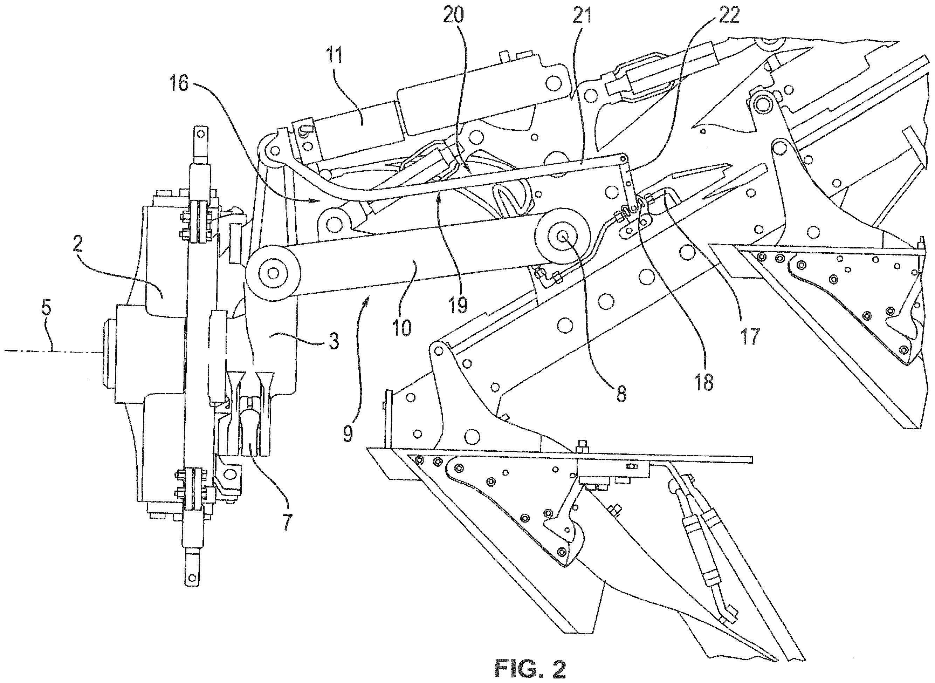

An dem Wendebock 6 ist der Pflugrahmen 3 aufgehängt und verstellbar angelenkt, wie noch erläutert wird, wobei der insgesamt längliche, insbesondere trägerförmige Pflugrahmen 3 in seinen Arbeitsstellungen jeweils schräg, insbesondere spitzwinklig zur Wendeachse 5 geneigt angestellt ist, vgl. Figur 1 und Figur 2. Um den Pflug für den Wendevorgang handlicher zu machen und das aufzubringende Wendemoment zu begrenzen, kann der Pflugrahmen 3 um eine Einschwenkachse 8 in eine weniger schräg angestellte Wendestellung verbracht werden, sodass sich der Pflugrahmen 3 näher an der Wendeachse 5 erstreckt. Je nach Aufhängungsausbildung kann die genannte Einschwenkachse 8 eine räumlich relativ zum Wendebock 6 feststehende Achse oder auch eine wandernde Achse sein, die nach Art eines Momentandrehpols ihre Position relativ zum Wendebock 6 ändern kann. Die genannte Einschwenkachse 8 erstreckt sich hierbei aber quer zur Wendeachse 5, wobei die genannte Einschwenkachse 8 in den in den Figuren gezeigten Arbeitsstellungen aufrecht bzw. näherungsweise senkrecht ausgerichtet sein kann.

Wie die Figuren zeigen, kann der Pflugrahmen 3 über ein mehrgelenkiges Anlenkgetriebe 9 an dem Wendebock 6 aufgehängt sein, wobei das Anlenkgetriebe 9 einen Anlenkträger 10 umfassen kann, der einerseits gelenkig um eine Schwenkachse parallel zur Einschwenkachse 8 an dem Wendebock 6 und andererseits gelenkig um eine Achse parallel zur Einschwenkachse 8 an dem Pflugrahmen 3 bzw. einem damit verbundenen Zwischenrahmen angelenkt sein kann. Zusammen mit dem genannten Anlenkträger 10 kann ein hiervon beabstandeter Einschwenkaktor 11 bspw. in Form eines Hydraulikzylinders ein Viergelenk bilden, über das der Pflugrahmen 3 bzw. der damit verbundene Zwischenrahmen gegenüber dem Wendebock 6 verschwenkbar ist, wenn der genannte Einschwenkaktor 11 verstellt wird.

Wie die Figuren weiterhin zeigen, kann der Pflugrahmen 3 unabhängig von dem Einschwenkaktor 11 über weitere Gelenkigkeiten und Stellaktoren verstellt werden. Beispielsweise kann über einen Vorfurchenaktor 12 und einen Zugpunktaktor 13 die Schwenkstellung des Pflugrahmens 3 gegenüber dem genannten Zwischenrahmen 14 und/oder das zuvor genannte Viergelenk in sich weiter verstellt werden. Ein Schnittbreitenaktor 15 kann weiterhin die Schwenkstellung der Pflugschare 4 gegenüber dem Pflugrahmen 3 verstellen.

Je nachdem, wie die weiteren Aktoren 12, 13 und 15 eingestellt sind, kann es notwendig werden, den Einschwenkaktor 11 weniger weiter oder weiter zu verstellen, um den Pflugrahmen 3 in die gewünschte Wendestellung zu verbringen. Um die jeweils gewünschte Wendestellung anzufahren, wird der genannte Einschwenkaktor 11 über eine hydraulische Drehwinkelsteuerung 16 angesteuert, wobei vorteilhafterweise kein Anschlag angefahren werden muss, sondern der Einschwenkzylinder 11 in der jeweils gewünschten Hubstellung hydraulisch gehalten werden kann, um die damit einhergehende Wendestellung des Pflugrahmens 3 zu halten.

Insbesondere kann in der hydraulischen Druckversorgung 17, über die der Einschwenkaktor 11 mit Hydraulikdruck versorgt werden kann, ein Sperrventil 18 vorgesehen sein, wobei das Sperrventil 18 die Zuflussseite und/oder die Abflussseite des Einschwenkaktors 11 bzw. der zugehörigen Druckmittelversorgung 17 absperren kann.

Das genannte Sperrventil 18 wird hierbei in Abhängigkeit der Schrägstellung des Pflugrahmens 3 gegenüber dem Wendebock 6 bezüglich der Einschwenkachse 8 angesteuert und betätigt.

Eine Erfassungseinrichtung 19 erfasst hierbei die Schrägstellung des Pflugrahmens 3 gegenüber dem Wendebock 6, wobei die genannte Erfassungseinrichtung 19 eine mechanische Abtastung der Schrägstellung vorsehen kann. Insbesondere kann eine mechanische Koppelung 20 zwischen dem Wendebock 6 und dem Pflugrahmen 3 vorgesehen und an das genannte Sperrventil 18 angebunden sein, um Schwenkbewegungen des Pflugrahmens 3 gegenüber dem Wendebock gegenüber der Einschwenkachse 8 in eine Ventilstellbewegung umzusetzen.

Wie Fig. 2 zeigt, kann die genannte mechanische Koppel 20 eine zug- und druckfeste Koppelstange 21 aufweisen, die einerseits an dem Anlenkpunkt des Einschwenkaktors 11 an dem Wendebock 6 angelenkt und andererseits an einem Betätigungshebel 21 des Sperrventils 18 gelenkig angelenkt sein kann, wobei das genannte Sperrventil 18 an dem Pflugrahmen 3 befestigt sein kann.

Wie sich aus den Figuren 1 und 2 ergibt, wird der Betätigungshebel 21 des am Pflugrahmen 3 befestigten Sperrventils 18 verstellt, wenn der Pflugrahmen 3 gegenüber dem Wendebock 6 verschwenkt wird, da die genannte Koppelstange 21 gegenüber dem Pflugrahmen 3 verschoben und damit der Betätigunghebel 22 verstellt wird.

Die mechanische Koppel 20 ist dabei vorteilhafterweise derart konfiguriert, dass das Sperrventil 18 freigegeben bzw. geöffnet ist, solange der Pflugrahmen 3 in der gezeigten Arbeitsstellung und ähnlich schrägstehenden Winkelstellungen ausgerichtet ist, und das Sperrventil erst dann in seine absperrende Stellung gebracht wird, wenn der Pflugrahmen 3 weit genug eingeschwenkt, das heißt nahezu parallel oder nur noch geringfügig gegenüber der Wendeachse 5 schräggestellt ist. Dieser Einschwenkvorgang wird durch Ausfahren des Einschwenkaktors 11 erzielt.

## Patentansprüche

1. Anbaudrehpflug mit einem Anbaubock (2) zum Anbau an einen Schlepper, einem Pflugrahmen (3), der zwei Pflugscharreihen trägt und um eine liegende Wendeachse (5) drehbar ist, wobei die Pflugscharreihen durch einen Schnittbreitenaktor in ihrer Schnittbreite verstellbar sind und der Pflugrahmen (3) an einem Wendebock (6), der um die genannte liegende Wendechse (5) schwenkbar am Anbaubock (2) gelagert ist, um eine Einschwenkachse (8) quer zur Wendeachse (5) einschwenkbar gelagert und durch einen Druckmittel betätigbaren Einschwenkaktor (11) für den Wendevorgang in eine Wendestellung mit verringerter Querausladung einschwenkbar ist, wobei der Einschwenkaktor (11) von einer Schwenkwinkelsteuerung für verschiedene Schnittbreiten und/oder Arbeitsbreiten in verschiedene Hubstellungen zum Erreichen der gewünschten Wendestellung steuerbar ist, **dadurch gekennzeichnet, dass** die Schwenkwinkelsteuerung eine Erfassungseinrichtung (19) zum Erfassen der Schwenkstellung des Pflugrahmens (3) relativ zum Wendebock (6) bezüglich der Einschwenkachse (8) und ein Sperrventil (18) zum Absperren der Druckmittelversorgung (17) des Einschwenkaktors (11) zum Anfahren und Halten einer Wende- und/oder Transportstellung des Einschwenkaktors (11) in Abhängigkeit der erfassten Schwenkstellung des Pflugrahmens aufweist.

2. Anbaudrehpflug nach dem vorhergehenden Anspruch, wobei die Erfassungseinrichtung (19) eine mechanische Koppelung (20) zwischen dem Wendebock (6) und dem Pflugrahmen (3) umfasst, die an das Sperrventil (18) angebunden ist und Schwenkbewegungen des Pflugrahmens (3) relativ zu dem Wendebock (6) bezüglich der Einschwenkachse (8) in eine Ventilstellbewegung umsetzt, insbesondere das Sperrventil (18) bei Erreichen der gewünschten Wendestellung des Pflugrahmens (3) absperrt.

3. Anbaudrehpflug nach dem vorhergehenden Anspruch, wobei das Sperrventil (18) bezüglich der Einschwenkachse (8) drehfest an dem Pflugrahmen (3) befestigt ist und die mechanische Koppelung (20) das Sperrventil (18) mit dem Wendebock (6) verbindet.

4. Anbaudrehpflug nach einem der beiden vorhergehenden Ansprüche, wobei die mechanische Koppelung (20) eine gelenkig angelenkte Koppelstange (21) umfasst, die einerseits gelenkig an einem Anlenkpunkt des Einschwenkaktors (11) an dem Wendebock (6) und andererseits gelenkig an einem Ventilstellhebel (22) angelenkt ist.

5. Anbaudrehpflug nach Anspruch 2, wobei die mechanische Koppelung (20) einen Seilzugmechanismus umfasst.

6. Anbaudrehpflug nach einem der vorhergehenden Ansprüche, wobei die Erfassungseinrichtung (19) einen Sensor zum Erfassen der Schwenkstellung des Pflugrahmens (3) relativ zum Wendebock (6) aufweist und das Sperrventil in Abhängigkeit eines Sensorsignals des genannten Sensors elektrisch betätigbar ausgebildet ist.

7. Anbaudrehpflug nach einem der vorhergehenden Ansprüche, wobei bei erfassten Schwenkstellungen des Pflugrahmens (3), die eine Schrägstellung gegenüber der Wendeachse (5) größer als ein vorbestimmter Schwellenwert angeben, das Sperrventil (18) geöffnet und damit der Einschwenkaktor (11) betätigbar ist, während bei erfassten Schwenkstellungen des Pflugrahmens (3), die einer gewünschten Wendestellung entsprechen oder einen Schwenkwinkel gegenüber der Wendeachse (5) kleiner als ein vorbestimmter Schwellenwert angibt, das Sperrventil (18) abgesperrt und damit der Einschwenkaktor (11) in seiner Stellung gehalten ist.

8. Anbaudrehpflug nach einem der vorhergehenden Ansprüche, wobei die Schwenkwinkelsteuerung dazu ausgebildet ist, den Einschwenkaktor (11) unabhängig von einer Stellung des Schnittbreitenaktors und ggfs. vorhandener, weiterer Verstellaktoren und deren Betätigung zu betätigen.

9. Anbaudrehpflug nach einem der vorhergehenden Ansprüche, wobei der Einschwenkaktor (11) mit seiner Druckmittelversorgung an die Druckmittelversorgung eines Wendeaktors angebunden ist derart, dass bei Druckbeaufschlagung des Wendeaktors der Einschwenkaktor (11) mit Druckmittel beaufschlagt wird, solange das Sperrventil (18) geöffnet ist.

10. Anbaudrehpflug nach einem der vorhergehenden Ansprüche, wobei der Schnittbreitenaktor zum Verstellen der Schnittbreite der Pflugschare bei Betätigung des Einschwenkaktors (11) und/oder bei in der Wendestellung befindlichen Pflugrahmen deaktiviert ist.

11. Anbaudrehpflug nach einem der vorhergehenden Ansprüche, wobei der Pflugrahmen (3) an dem Wendebock (6) an einem Anlenkgetriebe (9) verschwenkbar angelenkt ist, welches Anlenkgetriebe (9) zumindest einen Anlenkträger (10) aufweist, der an dem Wendebock (6) und an dem Pflugrahmen (3) oder einem Zwischenrahmen andererseits gelenkig angelenkt ist.

12. Anbaudrehpflug nach dem vorhergehenden Anspruch, wobei der Einschwenkaktor (11) zusammen mit dem vorgenannten Anlenkträger (10) einen mehrgelenkigen Teil des Anlenkgetriebes (9), insbesondere ein Viergelenk, bildet.

13. Anbaudrehpflug nach einem der beiden vorhergehenden Ansprüche, wobei das Anlenkgetriebe (9) zumindest eine zusätzlich zu und/oder unabhängig von dem Einschwenkaktor (11) betätigbare Verstellbarkeit aufweist.

## Claims

1. Mounted rotatable plough, with an headstock (2) for attachment to a tractor, a plough frame (3) that carries two rows of plough shares and is rotatable about a lying turning axis (5), wherein a cutting width of the rows of plough shares is adjustable by means of a cutting width actuator, and the plough frame (3) is mounted on a turning block (6), which is mounted on the headstock (2) in a manner pivotable about said lying turning axis (5), in a manner to be pivotable inwards about an inward-pivot axis (8) transversally to the turning axis (5) and can be pivoted inwards by an inward-pivot actuator (11), that is actuatable by a pressure medium, for the turning operation, to a turned position with reduced transverse outreach, wherein the inward-pivot actuator (11) can be controlled by a pivot angle control for different cutting widths and/or working widths to different lift positions for reaching the desired turned position, **characterized in that** the pivot angle control comprises a detection means (19) for the detection of the pivot position of the plough frame (3) relative to the turning block (6) with respect to the inward-pivot axis (8), and a check valve (18) for blocking the pressure medium supply (17) of the inward-pivot actuator (11) for reaching and maintaining a turned position and/or transport position of the inward-pivot actuator (11) depending upon the detected pivot position of the plough frame.

2. Mounted rotatable plough according to the preceding claim, wherein the detection means (19) comprises a mechanical coupling (20) between the turning block (6) and the plough frame (3), which coupling is connected to the check valve (18) and translates pivot movements of the plough frame (3) relative to the turning block (6) with respect to the inward-pivot axis (8) to a valve actuation movement, in particular blocks the check valve (18) upon reaching the desired turned position of the plough frame (3).

3. Mounted rotatable plough according to the preceding claim, wherein the check valve (18) is attached to the plough frame (3) in a manner torque-poof with respect to the inward-pivot axis (8), and the mechanical coupling (20) connects the check valve (18) to the turning block (6).

4. Mounted rotatable plough according to any one of the preceding claims, wherein the mechanical coupling (20) includes a coupling bar (21) hinged in an articulated manner, which on one side is hinged on a pivot point of the inward- pivot actuator (11) on the turning block (6) in an articulated manner, and on the other side is attached to a valve actuation lever (22) in an articulated manner.

5. Mounted rotary plough according to claim 2, wherein the mechanical coupling (20) includes a cable pull mechanism.

6. Mountable rotary plough according to any one of the preceding claims, wherein the detection means (19) comprises a sensor for detecting the pivot position of the plough frame (3) in relation to the turning block (6), and the check valve is configured to be electrically actuatable dependent upon a sensor signal of said sensor.

7. Mountable rotary plough according to any one of the preceding claims, wherein the check valve (18) is open and thus the inward-pivot actuator (11) is actuatable if detected pivot positions of the plough frame (3) that indicate a inclined position relative to the turning axis (5) greater than a predetermined threshold value, while the check valve (18) is locked and thus the inward-pivot actuator (11) is held in its position if the detected pivot positions of the plough frame (3) correspond to a desired turned position or indicate a pivot angle relative to the turning axis (5) of less than a predetermined threshold.

8. Mounted rotatable plough according to any one of the preceding claims, wherein the pivot angle control is configured to actuate the inward-pivot actuator (11) independently of a position of the cutting width actuator and further adjustment actuators, which may optionally be present, and their actuation.

9. Mounted rotatable plough according to any one of the preceding claims, wherein the inward-pivot actuator (11), with its pressure medium supply, is connected to the pressure medium supply of a turning actuator in such a way that a pressure medium is applied to the inward-pivot actuator (11) upon a pressure application of the turning actuator as long as the check valve (18) is open.

10. Mounted rotatable plough according to any one of the preceding claims, wherein the cutting width actuator for adjusting the cutting width of the plough shares is deactivated upon actuation of the inward-pivot actuator (11) and/or if the plough frame is in the turned position.

11. Mounted rotatable plough according to any one of the preceding claims, wherein the plough frame (3) on the turning block (6) is articulated on an articulation gearing (9) in a pivotable manner, which articulation gearing (9) comprises at least one articulation carrier (10) which is hinged in an articulated manner on the turning block (6) and on the plough frame (3) or, on the other side, on an intermediate frame.

12. Mounted rotatable plough according to the preceding claim, wherein the inward-pivot actuator (11) forms a multi-joint part of the articulation gearing (9), in particular a four-joint-link, together with the said articulation carrier (10).

13. Mounted rotatable plough according to any one of the preceding claims, wherein the articulation gearing (9) comprises at least one adjustability in addition to and/or independently of the inward-pivot actuator (11).

## Revendications

1. Charrue portée rotative avec un support d'attelage (2) destiné à être attelé sur un tracteur, un cadre de charrue (3), qui porte deux rangées de socs de charrue et peut tourner autour d'un axe de retournement horizontale (5), les rangées de socs de charrue étant réglables dans leur largeur de coupe par un actionneur de largeur de coupe et que le cadre de charrue (3), à un socle de retournement (6) monté au support d'attelage (2) de manière à pouvoir pivoter autour l'axe de retournement horizontal (5) est monté de manière à pivoter vers l'intérieur autour d'un axe de pivotement vers l'intérieur (8) transversale à l'axe de retournement (5), de manière à pivoter vers l'intérieur, et au moyen d'un actionneur de pivotement vers l'intérieur (11) actionnable par fluide de pression est pivotable vers l'intérieur aux fins de l'opération de retournement vers une position de retournement avec extension transversale réduite, l'actionneur de pivotement vers l'intérieur (11) étant dirigeable par une commande d'angle de pivotement pour différentes largeurs de coupe et/ou largeurs de travail vers de différentes positions de levage en vue d'atteindre la position de retournement souhaitée, **caractérisée en ce que** la commande d'angle de pivotement présente un dispositif de détection (19) pour détecter la position de pivotement du cadre de charrue (3) par rapport au socle de retournement (6) en relation avec l'axe de pivotement vers l'intérieur (8) et un soupape d'arrêt (18) pour arrêter l'alimentation en fluide de pression (17) de l'actionneur de pivotement vers l'intérieur (11) en vue d' arriver à ou de maintenir une position de retournement et/ou de transport de l'actionneur de pivotement vers l'intérieur (11) en fonction de la position de pivotement détectée du cadre de charrue.

2. Charrue portée rotative selon la revendication précédente, le dispositif de détection (19) comprenant un couplage mécanique (20) entre le socle de retournement (6) et le cadre de charrue (3) qui est raccordé au soupape d'arrêt (18) et convertit des mouvements de pivotement du cadre de charrue (3) par rapport au socle de retournement (6) en relation avec l'axe de pivotement vers l'intérieur (8) dans un mouvement d'actionnement de clapet, notamment arrête le soupape d'arrêt (18) une fois arrivé à la position de retournement souhaitée du cadre de charrue (3).

3. Charrue portée rotative selon la revendication précédente, sachant que le soupape d'arrêt (18) est fixé de manière non rotative en relation avec l'axe de pivotement vers l'intérieur (8) sur le cadre de charrue (3) et que le couplage mécanique (20) raccorde le soupape d'arrêt (18) avec le socle de retournement (6).

4. Charrue portée rotative selon une quelconque des deux revendications précédentes, le couplage mécanique (20) comportant une tige de couplage (21) articulée à charnière qui est articulée d'un côté de manière à charnière sur un point d'articulation de l'actionneur de pivotement vers l'intérieur (11) sur le socle de retournement (6) et d'autre côté de manière à charnière sur un levier de commande de clapet (22).

5. Charrue portée rotative selon la revendication 2, le couplage mécanique (20) comportant un mécanisme à câble de traction.

6. Charrue portée rotative selon une quelconque des revendications précédentes, le dispositif de détection (19) présentant un capteur pour détecter la position de pivotement du cadre de charrue (3) par rapport au socle de retournement (6) et que le soupape d'arrêt est configuré de manière à pouvoir être actionné par voie électrique en fonction d'un signal de capteur dudit capteur.

7. Charrue portée rotative selon une quelconque des revendications précédentes, dans laquelle lors des positions de pivotement détectées du cadre de charrue (3), qui indiquent une position d'inclinaison par rapport à l'axe de retournement (5) supérieure à une valeur seuil prédéterminée, le soupape d'arrêt (18) est ouvert et par conséquent l'actionneur de pivotement vers l'intérieur (11) est actionnable, tandis que pour les positions de pivotement détectées du cadre de charrue (3), qui correspondent à une position de retournement désirée ou indiquent un angle de pivotement par rapport à l'axe de retournement (5) inférieur à une valeur seuil prédéterminée, le soupape d'arrêt (18) est bloqué et par conséquent l'actionneur de pivotement vers l'intérieur (11) est maintenu dans sa position.

8. Charrue portée rotative selon une quelconque des revendications précédentes, la commande d'angle de pivotement est conçue pour actionner l'actionneur de pivotement vers l'intérieur (11) indépendamment d'une position de l'actionneur de largeur de coupe et le cas échéant, d'autres actionneurs de réglage présents et de leur actionnement.

9. Charrue portée rotative selon une quelconque des revendications précédentes, l'actionneur de pivotement vers l'intérieur (11) étant raccordé avec son alimentation en fluide de pression à l'alimentation en fluide de pression d'un actionneur de retournement de sorte qu'en cas de mise sous pression de l'actionneur de retournement, l'actionneur de pivotement vers l'intérieur (11) est alimenté en fluide de pression, pendant que le soupape d'arrêt (18) est ouvert.

10. Charrue portée rotative selon une quelconque des revendications précédentes, l'actionneur de largeur de coupe étant désactivé pour le réglage de la largeur de coupe des socs de charrue lors d'un actionnement de l'actionneur de pivotement vers l'intérieur (11) et/ou lors du cadre de charrue se trouve dans la position de retournement.

11. Charrue portée rotative selon une quelconque des revendications précédentes, le cadre de charrue (3) étant articulé sur le socle de retournement (6) de manière à pouvoir pivoter sur un engrenage d'articulation (9), ledit engrenage d'articulation (9) présentant au moins un support d'articulation (10), qui est articulé à charnière sur le socle de retournement (6) et sur le cadre de charrue (3) ou d'autre part, sur un cadre intermédiaire.

12. Charrue portée rotative selon la revendication précédente, dans lequel l'actionneur de pivotement vers l'intérieur (11) constitue, ensemble avec ledit support d'articulation (10), une partie à articulations multiples du mécanisme d'articulation (9), notamment un quadrilatère articulé.

13. Charrue portée rotative selon une quelconque des deux revendications précédentes, le mécanisme d'articulation (9) présentant au moins une option de réglage actionnable en supplément et/ou indépendamment de l'actionneur de pivotement vers l'intérieur (11).
